# EUROPÄISCHE PATENTSCHRIFT

(11) **EP 0 893 634 B1**
(45) Veröffentlichungstag und Bekanntmachung des Hinweises auf die Patenterteilung: **21.11.2001**
(21) Anmeldenummer: 98113439.8
(22) Anmeldetag: 18.07.1998
(51) Int. Cl.: F16K 27/00, E03C 1/04

(54) **Sanitärarmatur**
Sanitary fitting
Armature sanitaire

(30) Priorität: 22.07.1997 DE 19731403
(43) Veröffentlichungstag der Anmeldung: 27.01.1999
(73) Patentinhaber: Diessner, Harald, 01809 Meusegast (DE)
(72) Erfinder: Diessner, Harald, 01809 Meusegast (DE)
(74) Vertreter: Hofmann, Klaus

(56) Entgegenhaltungen:
- EP-A- 0 061 562
- DE-A- 3 824 418
- FR-A- 2 478 702
- US-A- 4 772 509

## Beschreibung

Die Erfindung betrifft eine Armatur für eine gehobene Ausstattung im Sanitärbereich, wie in Bädern und Toiletten im privaten und öffentlichen Bereich.

Die bekannten Armaturen bestehen insbesondere aus metallischem und nichtmetallischem Guß, beispielsweise aus keramischen Massen oder auch aus Kunststoffen.

Bei der Herstellung von Armaturen aus herkömmlichen Legierungen sind deren umweltbelastende Produktionsprozesse und ein hoher Energieverbrauch von Nachteil. Außerdem sind metallische und nichtmetallische Oberflächenbeschichtungen bekannt, die jedoch weder putzmittel- noch kratzfest sind. Herkömmliche Armaturen sind wegen ihrer hohen Wärmeleitfähigkeit erheblichen plötzlichen Temperaturschwankungen (z.B. Taupunkt) ausgesetzt, was vom Nutzer oft als unangenehm empfunden wird. Außerdem sind verchromte Armaturengehäuse anfällig gegen Verkalkungen und Spritzwasser. Es wird versucht diese Nachteile durch spezielle Oberflächenbehandlungen zu beseitigen. So sind Überzüge aus Naßlack mit einer transparenten Kunstharzschicht oder Pulverbeschichtungen bekannt, die die genannten Nachteile jedoch nicht beseitigen können.

In DE 38 24 418 A1 ist beispielsweise ein Keramikmischer beschrieben, dessen Gehäuse ein Keramikhohlkörper aus vorzugsweise glasiertem Porzellan ist, in den eine Kartusche eingesetzt ist, die die Steuerelemente aufweist und die mit den Wasserzuführungen verbunden ist. Dieser Keramikhohlkörper wird als Vorgußteil vorgefertigt und dann mit entsprechenden Werkzeugen, beispielsweise mit Diamanthohlbohrern, fertiggestellt. Nachteilig dabei ist der hohe fertigungstechnische Aufwand für die paßgenaue Gußherstellung und eine unzureichende Synthese zwischen diesen keramischen Massen und angrenzenden Raumausstattungen, wenn z.B. Waschbecken, Wannen oder Wandverkleidungen bereits aus Natursteinen wie Marmor bestehen. Außerdem sind Porzellankörper äußerst stoßempfindlich.

Der Erfindung liegt die Aufgabe zugrunde, diese Nachteile zu beseitigen und eine Sanitärarmatur zu schaffen, deren Oberfläche kratz- und verschmutzungsunempfindlich ist, die gleichzeitig eine geringe Wärmeleitfähigkeit besitzt und höchsten Verbraucheransprüchen gerecht wird.

Die Aufgabe wird erfindungsgemäß durch Anspruch 1 gelöst, wobei das die Halte- und Steuerelemente aufnehmende Armaturengehäuse aus Naturstein besteht. Spezielle Ausgestaltungen sind in den Unteransprüchen 2 bis 8 beschrieben.

Nachfolgend wird die Erfindung an einem Ausführungsbeispiel näher erläutert. Die zugehörige Figur zeigt eine Einhebelmischbatterie.

Das einstückig ausgebildete Armaturengehäuse 10 besteht beispielsweise aus Granit. Es besitzt eine untere und eine gegenüberliegende obere Sackbohrung, die durch eine Bohrung geringeren Durchmessers miteinander verbunden sind, wodurch ein unterer und ein oberer Bund ausgebildet werden. Der Bund der unteren Sackbohrung dient der Aufnahme eines unteren Montageteils 6. Am Bund der oberen Sackbohrung liegt der Kartuschenkäfig 1 mit einer daran montierten Kartusche 2 und ein oberes Befestigungsteils (3) mit einem Einstellgriff (11) an. Eine innere Bohrung verbindet die untere und die obere Sackbohrung. Durch die innere Bohrung führt ein Zuganker, der das untere Montageteil 6 mit dem Kartuschenkäfig 1 verspannt, und die Netzleitungen 4 für Kalt- und Warmwasser, die in den Boden des Kartuschenkäfigs 1 eingebunden sind. Das Armaturengehäuse 10 besitzt weiterhin eine seitliche Auslaufbohrung, durch die ein Auslauf 9 mit einem Strahlregler durch den Kartuschenkäfig 1 bis in die Kartusche 2 führt. Die Armatur ist mit üblichen Dichtungs- und Verbindungsteilen komplettiert.

Die Montage aller Teile zur kompletten Armatur erfolgt zunächst als Vormontage der Kartusche 2 in den Kartuschenkäfig 1, wobei diese durch das Befestigungsteil 3 in den Kartuschenkäfig 1 eingepreßt wird. Am Boden des Kartuschenkäfigs 1 werden die Netzleitungen 4 zugeführt. Die weitere Montage erfolgt im Armaturengehäuse 10 selbst. Der Zuganker 5 verspannt das Montageteil 6 mit dem Kartuschenkäfig 1, wobei der Preßdruck über Unterlegscheiben 7 auf den Stein übertragen wird. Der Auslauf 9 wird durch eine Bohrung im Armaturengehäuse 10 aus Stein geführt und mit dem Kartuschenkäfig 1 verbunden.

Die Armatur wird komplett vormontiert mittels eines oder mehrerer Schraubverbindungen 8 und einer Scheibe auf die Montageebene 12 angepreßt.

Neben der abgebildeten Einhebelarmatur ist es möglich, die erfindungsgemäße Sanitärarmatur als Mehrlocharmatur oder anderen bekannten Ausführungen auszubilden.

Die Herstellung der Grundkörper kann manuell und maschinell erfolgen. Bei der maschinellen Herstellung sind spezielle Technologien, z.B. Hinterschliff, und ggf. spezielle Bohr- und Fräserköpfe notwendig. Nach der Grobbearbeitung sind Oberflächenbehandlungen, wie z.B. Polieren und Versiegeln möglich.

Bei der Auswahl geeigneter Werkstoffe für die Sanitärarmatur müssen Form- und Designgestaltungen mit Möglichkeiten maschineller Bearbeitbarkeit, Materialstärken und Wandungen, Materialverbindungen von Stein zu Messing, Kunst stoffen, Edelstahl usw., Stoßempfindlichkeit, Wasserverträglichkeit und die Einhaltung von Hygienebestimmungen berücksichtigt werden.

Die steinernen Armaturengehäuse, deren Wärmeleitfähigkeit gegenüber Metallausführungen deutlich geringer ist, und die deshalb im Betrieb wohltemperiert bleiben, können leicht in verschiedenen Formen hergestellt werden. Dies bedeutet ferner, daß die pflegeleichten Armaturengehäuse den sonstigen Sanitärausstattungen aus Naturmaterialien angepaßt werden können und höchsten Ansprüchen gerecht werden. Es erfolgt eine gelungene Synthese von Bad- und Sanitärraumausstattungen, von Wand- und Bodenbelägen, Armaturengruppen und den anderen Ausstattungsgegenständen, wie Waschtisch mit Waschtischablage, Badewanne, Bidet usw. Die Armaturen sind montagefreundlich herstellbar und wartungsarm. Die Oberflächen sind putzmittel- und kratzfest.

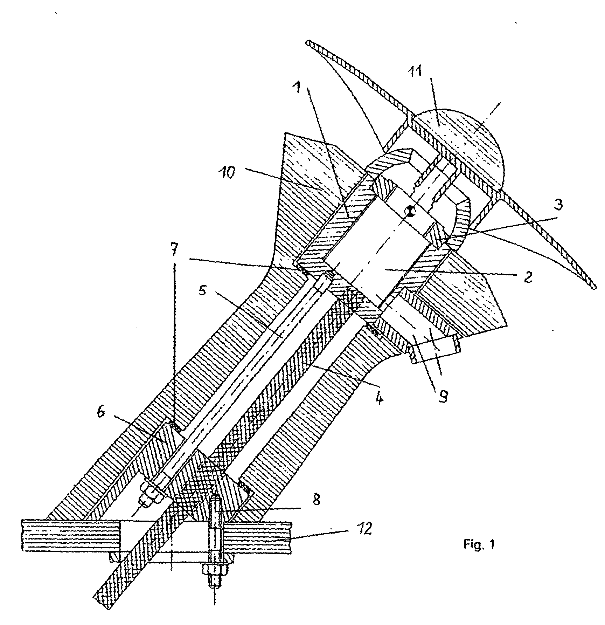

## Patentansprüche

1. Sanitärarmatur, bei der
- ein die Steuerelemente aufnehmendes Armaturengehäuse (10) zwei gegenüberliegende Sackbohrungen zur Aufnahme eines unteren Montageteils (6), eines Kartuschenkäfigs (1) mit einer daran montierten Kartusche (2) und eines oberen Befestigungsteils (3) mit einem Einstellgriff (11) besitzt,
- die beiden Sackbohrungen durch eine innere Bohrung verbunden sind, in der ein Zuganker (5) das untere Montageteil (6) und das obere Befestigungsteil (3) arretieren und durch die Netzleitungen (4) führen,
- das Armaturengehäuse (10) eine seitliche Auslauföffnung, besitzt, durch die ein Auslauf (9) bis in die Kartusche (2) führt,
- die Armatur mit üblichen Dichtungs- und Verbindungsteilen komplettiert ist,
**dadurch gekennzeichnet, daß** das Armaturengehäuse (10) aus Naturstein besteht.

2. Sanitärarmatur nach Anspruch 1, **dadurch gekennzeichnet, daß** als Naturstein Marmor, Porphyr, Granit, Diabas, Diorit, Syenit, Serpentinit oder Halbedelstein, wie beispielsweise Achat, Türkis oder Opal verwendet wird.

3. Sanitärarmatur nach den Ansprüchen 1 und 2, **dadurch gekennzeichnet, daß** das Armaturengehäuse (10) einstückig ausgebildet ist.

4. Sanitärarmatur nach den Ansprüchen 1 bis 3, **dadurch gekennzeichnet, daß** das untere Montageteil (6) eine Bohrung für eine Schraubverbindung (8) besitzt.

5. Sanitärarmatur nach den Ansprüchen 1 bis 4, **dadurch gekennzeichnet, daß** der Einstellgriff (11) oder Teile davon aus Naturstein besteht.

6. Sanitärarmatur nach den Ansprüchen 1 bis 5, **dadurch gekennzeichnet, daß** der Auslauf (9) von der aus dem Kartuschenkäfig (1), der Kartusche (2), dem oberen Befestigungsteils (3) und dem Einstellgriff (11) bestehenden Betätigungseinheit räumlich getrennt ist.

7. Sanitärarmatur nach den Ansprüchen 1 bis 6, **dadurch gekennzeichnet, daß** die Natursteinoberflächen poliert und/ oder versiegelt sind.

## Claims

1. Sanitary fitting, in which
- a fitting housing (10) which accommodates the control elements has two opposite blind bores for accommodating a lower mounting part (6), a cartridge cage (1) with a cartridge (2) mounted thereon and an upper attachment part (3) with an adjustment grip (11),
- the two blind bores are connected by an inner bore, in which a tie rod (5) retains the lower mounting part (6) and the upper attachment part (3) and through which mains lines (4) lead,
- the fitting housing (10) has a lateral outlet opening, through which an outlet (9) leads into the cartridge (2),
- the fitting is completed with conventional sealing and connection parts,
**characterized in that** the fitting housing (10) consists of natural stone.

2. Sanitary fitting according to Claim 1, **characterized in that** the natural stone used is marble, porphyry, granite, diabase, diorite, syenite, serpentinite or semi-precious stone, such as for example agate, turquoise or opal.

3. Sanitary fitting according to Claims 1 and 2, **characterized in that** the fitting housing (10) is of single-piece design.

4. Sanitary fitting according to Claims 1 to 3, **characterized in that** the lower mounting part (6) has a bore for a screw connection (8).

5. Sanitary fitting according to Claims 1 to 4, **characterized in that** the adjustment grip (11) or parts thereof consists of natural stone.

6. Sanitary fitting according to Claims 1 to 5, **characterized in that** the outlet (9) is spatially separated from the actuating unit comprising the cartridge cage (1), the cartridge (2), the upper attachment part (3) and the adjustment grip (11).

7. Sanitary fitting according to Claims 1 to 6, **characterized in that** the natural stone surfaces are polished and/or sealed.

## Revendications

1. Robinetterie sanitaire, dans laquelle
- un corps de robinet (10) contenant les organes de commande présente deux trous borgnes opposés destinés à recevoir une pièce de montage inférieure (6), une cage de cartouche (1) avec une cartouche incorporée (2) et une pièce de fixation supérieure (3) avec une poignée de réglage (11),
- les deux trous borgnes sont reliés par un alésage intérieur, dans lequel un tirant d'ancrage (5) bloque la pièce de montage inférieure (6) et la pièce de fixation supérieure (3) et à travers lequel passent des conduites d'alimentation (4).
- le corps de robinet (10) présente un orifice d'évacuation latéral, par lequel une sortie (9) conduit jusque dans la cartouche (2),
- la robinetterie est complétée avec les pièces usuelles d'étanchéité et de raccordement, **caractérisée en ce que** le corps de robinet (10) est constitué de pierre naturelle.

2. Robinetterie sanitaire suivant la revendication 1, **caractérisée en ce que** l'on utilise comme pierre naturelle le marbre, le porphyre, le granit, la diabase, la diorite, la syénite, la serpentine ou une pierre semi-précieuse, comme par exemple l'agate, la turquoise ou l'opale.

3. Robinetterie sanitaire suivant les revendications 1 et 2, **caractérisée en ce que** le corps de robinet (10) est formé d'une seule pièce.

4. Robinetterie sanitaire suivant les revendications 1 à 3, **caractérisée en ce que** la pièce de montage inférieure (6) présente un alésage pour un assemblage vissé (8).

5. Robinetterie sanitaire suivant les revendications 1 à 4, **caractérisée en ce que** la poignée de réglage (11) ou des parties de celle-ci sont constituées de pierre naturelle.

6. Robinetterie sanitaire suivant les revendications 1 à 5, **caractérisée en ce que** la sortie (9) est spatialement séparée de l'unité de manoeuvre composée de la cage de cartouche (1) de la cartouche (2), de la pièce de fixation supérieure (3) et de la poignée de réglage (11).

7. Robinetterie sanitaire suivant les revendications 1 à 6, **caractérisée en ce que** les surfaces de pierre naturelle sont polies et/ou métallisées sous vide.
